# FASCICULE DE BREVET EUROPEEN

(11) **EP 1 244 343 B1**
(45) Date de publication et mention de la délivrance du brevet: **16.03.2005**
(21) Numéro de dépôt: 00990099.4
(22) Date de dépôt: 21.12.2000
(51) Int. Cl.: A01F 29/00

(54) **DISPOSITIF DE DEMELAGE-DECHIQUETAGE POUR TOUS TYPES DE FOURRAGE ET PRODUITS CONDITIONNES EN BALLES**
VORRICHTUNG UM FUTTER ZU HÄCKSELN UND ZU ZERREISSEN
DEVICE FOR BALE GROUPING AND SHREDDING OF FODDER AND BALED PRODUCTS

(30) Priorité: 24.12.1999 FR 9916697
(43) Date de publication de la demande: 02.10.2002
(73) Titulaire: LUCAS G, 85130 La Verrie (FR)
(72) Inventeur: LUCAS, Gérard, F-85130 la Verrrie (FR); RETAILLAUD, Jean-Claude, F-85130 la Verrie (FR)
(74) Mandataire: Michelet, Alain
(86) Numéro de dépôt international: PCT/FR2000/003652
(87) Numéro de publication internationale: WO 2001/047345

(56) Documents cités:
- WO-A-95/28077
- BE-A- 558 601
- DE-A- 3 141 603
- FR-A- 2 450 039
- FR-A- 2 718 604
- FR-A- 2 774 855
- US-A- 3 208 491
- US-A- 3 863 850
- US-A- 3 915 392
- US-A- 3 979 074
- US-A- 3 999 674
- US-A- 5 368 238

## Description

La présente invention concerne un dispositif de démêlage et de déchiquetage de produits destinés à la préparation de l'alimentation du bétail ou à la préparation de leur litière, et, plus particulièrement, de produits du genre fourrage ou paille conditionnés en balles ou de produits du genre ensilage ou autre.

Ce dispositif peut notamment être intégré dans la benne d'une machine de distribution du genre de celle qui est décrite dans les documents EP-A-384 791 et FR-A-2 727 280 notamment.

L'opération de déchiquetage des balles de fourrage est plus ou moins délicate selon la nature du matériau c'est-à-dire la longueur des fibres ainsi que leur dureté et résistance.

Toutes les solutions développées, comme décrit dans les documents US-3 208 491 ou BE-558 601, et dans les documents de la demanderesse FR-2 718 604, WO-95/28077 et 2 774 855, tendent à mettre en oeuvre des moyens qui permettent de réaliser cette opération de déchiquetage des balles avec une grande efficacité.

La présente invention propose un dispositif de démêlage et de déchiquetage encore amélioré qui présente un caractère universel, c'est-à-dire qu'il permet de démêler et déchiqueter dans les meilleures conditions tous types de balles, et en particulier des balles de fourrage.

L'amélioration des qualités de découpe correspondantes est obtenue au moyen du dispositif tel que défini dans les revendications annexées, et en particulier du dispositif de la revendication n° 1, dont le préambule se base sur le document précité WO-95/28077.

Ainsi, pour parvenir au résultat recherché, le dispositif comprend d'une part, au moins un rotor et en particulier un rotor muni d'organes pour découper ladite balle et propulser les fragments de fourrage ou paille vers, par exemple, des moyens d'éjection et de distribution et, d'autre part, coopérant avec ledit rotor muni d'organes de découpe, une barrière en forme de herse munie de dents, chargée de retenir ladite balle et/ou de recycler les produits ; ce rotor de découpe comporte au moins un disque dont la périphérie est circulaire et lisse, et ce disque lisse coopère avec une dent de ladite herse, laquelle dent est placée dans le même plan que le disque, l'ensemble formant un front de retenue, évitant ainsi les phénomènes de bourrage en facilitant le recyclage des produits dans la benne.

Conformément à l'invention, le disque à périphérie circulaire et lisse est associée de part et d'autre de son plan à des organes de découpe en saillie en forme de couteaux ou sections, lesquels couteaux ou sections sont aménagés par couples et sont chacun disposés en biais par rapport au plan dudit disque et de ladite dent associée, de manière à former un Vé de découpe ouvert sur ladite dent.
De préférence, les couples de couteaux ou sections sont fixés sur le disque. Et de préférence encore, l'angle de la face des sections par rapport à la surface latérale de la dent et par rapport au plan du disque sur lequel elles sont montées, est compris entre 0 et 45°, avantageusement de l'ordre de 20°.

Ce dispositif de démêlage-déchiquetage s'accommode de tous les types de fourrage et de fibres, longues, tendres, dures et autres produits, paille, ensilage. Il peut aussi comporter plusieurs rotors selon le domaine d'utilisation.

D'autres particularités de l'invention font encore l'objet de revendications dépendantes.

L'invention est encore détaillée ci-après, en liaison avec les dessins annexés donnés à titre indicatif, et dans lesquels :
- la figure 1 représente, de façon schématique en coupe verticale longitudinale, le dispositif de démêlage-déchiquetage selon l'invention, intégré à titre d'exemple, dans une machine représentée partiellement, qui sert à la distribution de produits du genre fourrage ou paille, pour l'alimentation du bétail ou la constitution de litière ;
- la figure 2 montre, en perspective, un exemple de rotor selon l'invention ;
- la figure 3 montre d'une façon plus détaillée un couple de sections fixées sur un disque coopérant avec une dent ;
- la figure 4 est une vue schématique arrière de la machine représentée figure 1, montrant en plus une variante de réalisation du rotor ;
- la figure 5 représente en perspective, une paire de rotors superposés dont le rotor supérieur coopère avec les dents d'une barrière ;
- la figure 6 est une vue de côté des deux rotors représentés figure 5 ;
- la figure 7 représente, d'une façon partielle et plus détaillée, le positionnement des disques et des dents du rotor inférieur par rapport au rotor supérieur ;
- la figure 8 représente un autre mode de réalisation constitué de trois rotors superposés c'est-à-dire un rotor supérieur coopérant avec les dents de la barrière, un rotor intermédiaire et un rotor inférieur qui est identique audit rotor supérieur ;
- la figure 9 représente une variante de réalisation des rotors de la figure 5 en vue de réaliser un démêlage et un déchiquetage en fines particules, au moyen d'une multitude de disques munis de sections ;
- la figure 10 est une vue de côté de la figure 9 qui montre également une particularité au niveau des disques et de leur assemblage sur le rotor ;
- la figure 11 est une variante de la figure 9 avec trois rotors superposés ;
- la figure 12 montre, vus de face, les trois rotors superposés de la figure 11 et les dents disposées à la partie supérieure, coopérant avec le rotor supérieur.

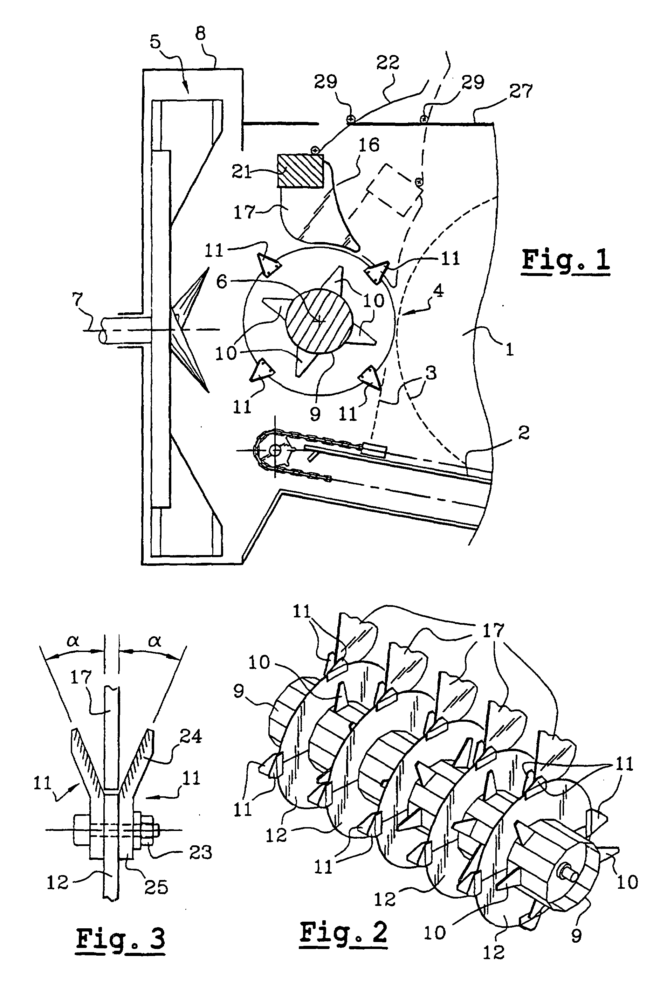

Tel que représenté figure 1, le dispositif de démêlage-déchiquetage est intégré, à titre d'exemple, dans une machine constituée d'une benne 1 dont le fond est équipé d'un dispositif convoyeur 2 du type tapis à barrettes. Ce tapis permet de faire avancer une balle 3 représentée sous forme de traits mixtes fins, qui est cylindrique ou parallélépipédique, laquelle balle progresse vers le dispositif de démêlage-déchiquetage constitué d'un rotor 4 qui est chargé de la mettre en pièce.

Les fragments sont propulsés par le rotor 4 et, selon le type d'utilisation, vers un ventilateur 5 par exemple, disposé dans la partie avant de la benne.

Le rotor 4 tourne autour d'un axe 6 horizontal perpendiculaire au sens d'avancement des balles 3. Le ventilateur 5 tourne autour d'un axe horizontal 7 qui est perpendiculaire à l'axe 6 du rotor 4.

Le ventilateur 5 est disposé dans une volute 8, située à l'avant de la benne et il permet l'éjection tangentielle des produits fragmentés.

Ce type de machine peut comporter un ou plusieurs rotors 4, disposés l'un au-dessus de l'autre, devant le ventilateur 5, tournant tous dans le même sens, comme détaillé plus loin.

Dans l'exemple de réalisation figure 1, la machine est représentée avec un seul rotor.

Ce rotor 4 comprend un tambour cylindrique 9 dont le diamètre peut être choisi de façon à offrir une circonférence de longueur supérieure à la longueur maximale des fibres du produit à fragmenter. Cette particularité permet d'éviter les risques d'enroulement des fibres autour du tambour.

Le tambour 9 est muni de moyens appropriés pour démêler, déchiqueter, et fragmenter la balle en tirant les fibres et en les coupant.

Ces moyens sont par exemple constitués de dents pointues 10 réparties sur la périphérie du tambour 9 ; ils sont également constitués d'organes de découpe en forme de couteau ou de section 11, répartis sur la périphérie de disques circulaires 12 qui sont positionnés chacun dans un plan radial, répartis sur la longueur du tambour 9.

Comme montré sur les figures 1 et 2 notamment, les disques 12 sont placés en correspondance avec une barrière 16 et en particulier avec les dents 17 de cette barrière. Ces dents 17 se présentent sous la forme de plaques de tôle, et elles sont façonnées à leur partie inférieure pour épouser le contour des disques 12 dont la périphérie est lisse, avec un jeu le plus faible possible.

Cette barrière 16 a pour rôle de retenir les paquets trop importants de produits et de les recycler dans la benne.

Les différentes dents 17 sont fixées sur une poutre 21 qui est disposée au-dessus du rotor 4 laissant une fenêtre de passage dont la hauteur correspond sensiblement au rayon dudit rotor.

Un déflecteur 22, détaillé plus loin, est placé au-dessus de la poutre 21 pour guider les produits à recycler dans la benne.

Les dents 17 forment avec les disques 12 associés, une véritable barrière. Pour franchir cette barrière, les fibres sont découpées ou tirées au moyen des dents 10 ou des sections 11. L'espace ou le pas entre deux dents adjacentes, est choisi en fonction du domaine d'utilisation de la machine.

Les sections 11 sont réparties sur la périphérie des disques 12. Ces sections 11 sont disposées, comme représenté figures 2 et 3, par couples, de part et d'autre du disque 12 ; elles sont fixées entre elles et sur la périphérie du disque 12, par des boulons 23 ou autres.

L'épaisseur du disque 12 est identique, voire légèrement supérieure, à celle de la dent 17 correspondante. Les sections 11 peuvent être droites mais, pour éviter de réaliser un simple cisaillage des fibres, ces sections 11 peuvent former une sorte de Vé qui s'étend de part et d'autre de chaque dent 17, sur les faces latérales de ladite dent 17.

L'angle ∝ entre la partie coupante 24 de la section 11 et la dent 17 ou encore le plan du disque 12, est compris entre 0 et 45° ; de préférence de l'ordre de 20°. Les sections forment une sorte de dièdre, et sont assemblées par couple au niveau de leur talon 25 au moyen des boulons 23 ou autres.

Chaque disque peut être équipé de trois à douze couples de sections selon la nature des matériaux à découper. Ces couples de sections peuvent également être déphasés d'un disque par rapport à l'autre, pour réduire voire supprimer les phénomènes de vibrations.

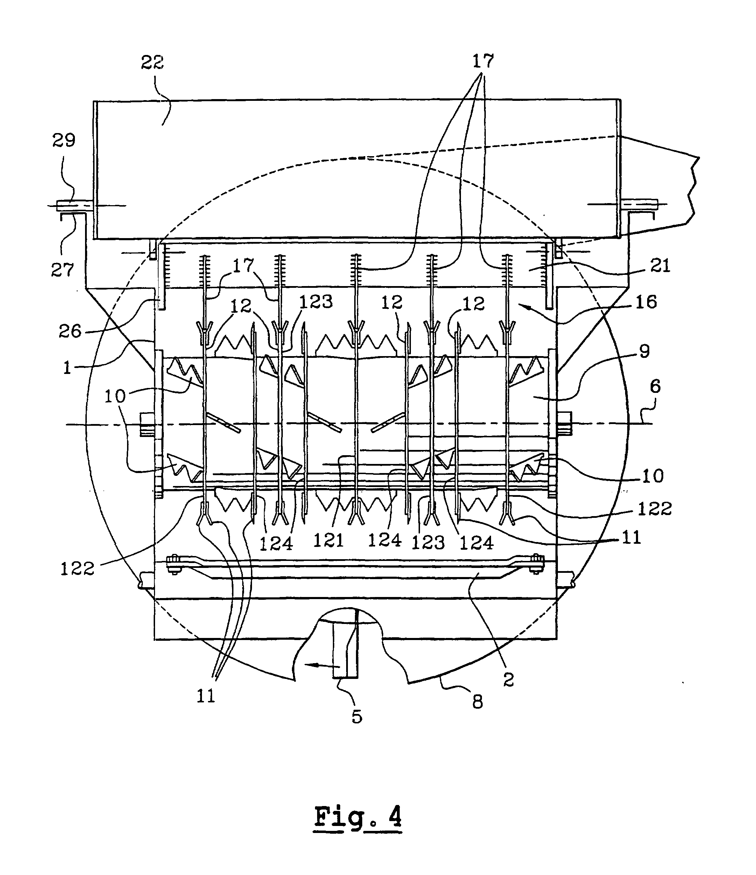

La barrière 16 peut être, selon le domaine d'utilisation, mobile autour du rotor 4. Sa poutre 21 est par exemple fixée sur des bras latéraux 26 qui apparaissent partiellement représentés figure 4 et ces bras sont guidés de façon appropriée par rapport à la benne 1 ou par rapport à l'axe 6 du rotor 4. On peut ainsi suivant le type et la nature du produit à distribuer, ralentir ou accélérer le débit en modifiant la profondeur de passe.

En partant de la normale, l'amplitude du mouvement de la barrière est de l'ordre de 35 à 40°, en allant vers l'amont c'est-à-dire vers l'entrée de la benne 1.

Ce déplacement de la barrière 16 autour du rotor 4 est par exemple réalisé au moyen d'un vérin non représenté, ou selon les moyens décrits dans le document FR-A-2 718 604 de la demanderesse. Le mouvement de la barrière 16 peut s'accompagner d'un déplacement et d'un pivotement du déflecteur 22.

Ce déflecteur 22 est par exemple articulé sur la poutre 21 et guidé sur les rebords latéraux supérieurs 27 de la benne 1 au moyen de doigts 29 qui s'étendent latéralement.

Ainsi, lorsque la poutre 21 de la barrière 16 se déplace, comme représenté en traits mixtes fins figure 1, elle entraîne dans son mouvement le déflecteur 22 qui a tendance à se redresser si la poutre 21 se déplace vers l'entrée de la benne 1 alors qu'à l'inverse le déflecteur a tendance à se coucher lorsque la poutre 21 se déplace vers le ventilateur 5.

La figure 4 montre un rotor muni de disques dont certains coopèrent avec les dents 17 de la barrière 16.

Les disques 12 sont répartis sur la longueur du rotor. On trouve un disque central 121 et des disques latéraux 122 qui peuvent par exemple, avoir le même diamètre.

Entre ces disques 121 et 122 on trouve des disques 123 dont le diamètre peut être légèrement plus faible. De part et d'autre des disques 123 on trouve des disques 124 qui ont un diamètre similaire à celui des disques 121 et 122.

Les disques 121, 122 et 123 sont placés en correspondance avec des dents 17.

Les disques 124, c'est-à-dire les disques qui ne sont pas en vis-à-vis des dents de la barrière 16, peuvent comporter des sections 11 simples c'est-à-dire des sections droites. Ils peuvent également comporter des sections en forme de dièdres comme pour les autres disques 121, 122, 123.

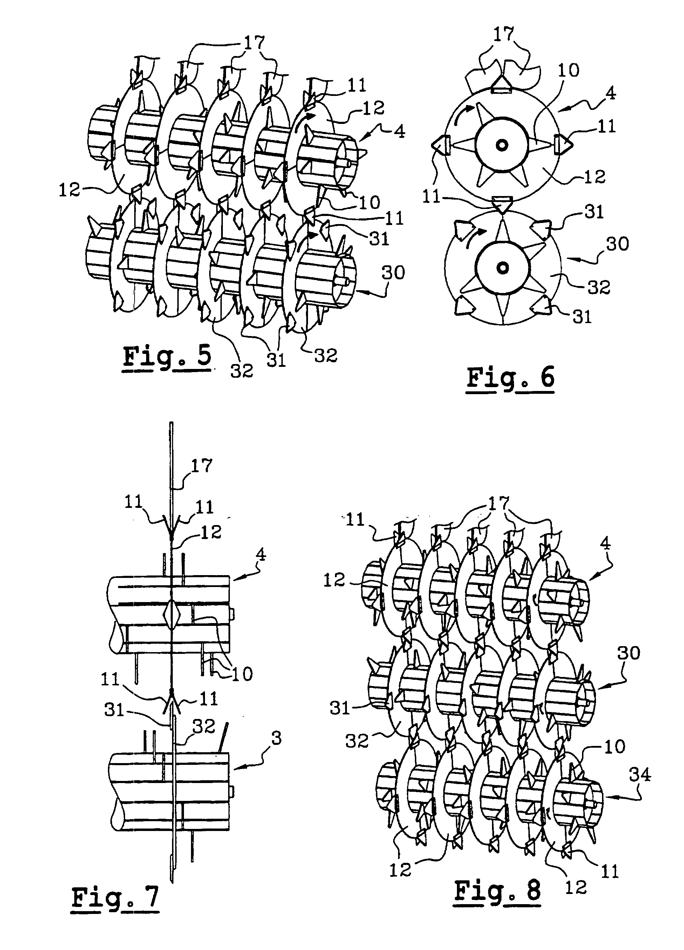

La figure 5 représente une variante de réalisation de la figure 2 et de la figure 1, montrant deux rotors superposés dont les axes de rotation sont parallèles entre eux : - le rotor supérieur 4, tel que décrit figure 2, dont les disques 12 sont munis de couples de sections 11 et coopèrent avec les dents 17, et - le rotor inférieur 30 muni lui aussi de disques 32. Chaque disque 32 du rotor 30 comporte des sections 31, boulonnées sur l'une des faces du disque, d'un même côté. Ces sections 31 se situent dans le plan des disques 12 du rotor 4, alors que les disques 32 sont légèrement décalés par rapport aux disques 12 dudit rotor 4.

Les sections 31 s'inscrivent dans un cercle qui tangente avec un jeu fonctionnel raisonnable, la périphérie du disque 12 correspondant.

Les deux rotors 4 et 30 tournent dans le même sens comme représenté par les différentes flèches placées figure 5 et figure 6.

La vitesse de rotation des rotors peut être différente. La vitesse du rotor inférieur 30 est par exemple supérieure à celle du rotor supérieur 4. Cette différence de vitesse peut s'établir dans une proportion de l'ordre de 10 à 30 % par exemple.

Le rotor inférieur 30 peut comporter sur ses disques 32, un nombre de sections 31, supérieur à celui des couples de sections 11 disposés sur les disques 12 du rotor 4. De cette façon on obtient une découpe des produits qui passent alors entre les deux rotors 4 et 30, ce qui a pour effet de répartir le débit de produits découpés entre d'une part, lesdits rotors 4 et 30 et, d'autre part, le rotor supérieur 4 et la barrière 16.

Selon les produits à traiter, il est également possible de mettre moins de disques 32 sur le rotor 30 par rapport au rotor 4. Ainsi figure 5, le rotor 30 peut comporter deux ou trois disques répartis sur sa longueur, mais qui restent en relation avec les disques 12 correspondants du rotor 4.

La figure 6 montre, vus de côté, le rotor 4 et le rotor 30. A la partie supérieure du rotor 4, on trouve les dents 17, lesquelles dents sont mobiles sur un secteur circulaire comme détaillé auparavant figure 1.

Le rotor inférieur 30 comporte, comme le rotor supérieur 4, des dents pointues 10 réparties sur la périphérie du tambour.

La figure 7 représente, d'une façon plus détaillée, vu de face, le rotor supérieur 4 dont le disque 12 coopère avec une dent 17, laquelle dent se situe dans le plan du disque 12. Le rotor inférieur 30 comporte un disque 32 muni de sections 31. Ces sections 31 se situent dans le plan du disque supérieur 12. Le disque inférieur 32 est légèrement décalé latéralement par rapport au disque supérieur 12.

Le nombre de sections installées sur chaque disque des deux rotors 4 et 30 peut varier selon les nécessités, de trois à douze couples par exemple, pour les rotors 4 et 30.

La figure 8 montre une variante qui consiste en une adjonction d'un rotor inférieur 34. Ce rotor inférieur 34 comporte, comme le rotor supérieur 4, des disques 12 et sur leur périphérie, des couples de sections 11. Le rotor 30 fait figure de rotor intermédiaire.

Les trois rotors tournent dans le même sens et forment un front de déchiquetage et de coupe important. Leur vitesse de rotation est différente allant en diminuant de bas en haut. Le rotor inférieur 34 tourne plus vite que le rotor intermédiaire 30 et ledit rotor 30 tourne plus vite que le rotor supérieur 4. La différence de vitesse entre deux rotors adjacents s'établit dans une proportion de 10 à 30 %. Là encore le rotor intermédiaire 30 peut comporter plus de sections 31 que les rotors 4 et 34.

Par sa vitesse de rotation qui est supérieure à celle du rotor 4, le rotor 30 entraîne une partie des produits qui se sont déchiquetés entre les couples de sections 11 dudit rotor 4 et les sections 31.

Le phénomène est le même entre le rotor 34 et le rotor intermédiaire 30 ; le rotor 34 prend aussi sa part de débit de produits démêlés et déchiquetés.

Le rotor inférieur 34 peut aussi comporter un nombre réduit de disques 12, soit un nombre égal à celui du rotor supérieur 30, soit un nombre inférieur, en fonction du domaine d'utilisation et des produits à déchiqueter.

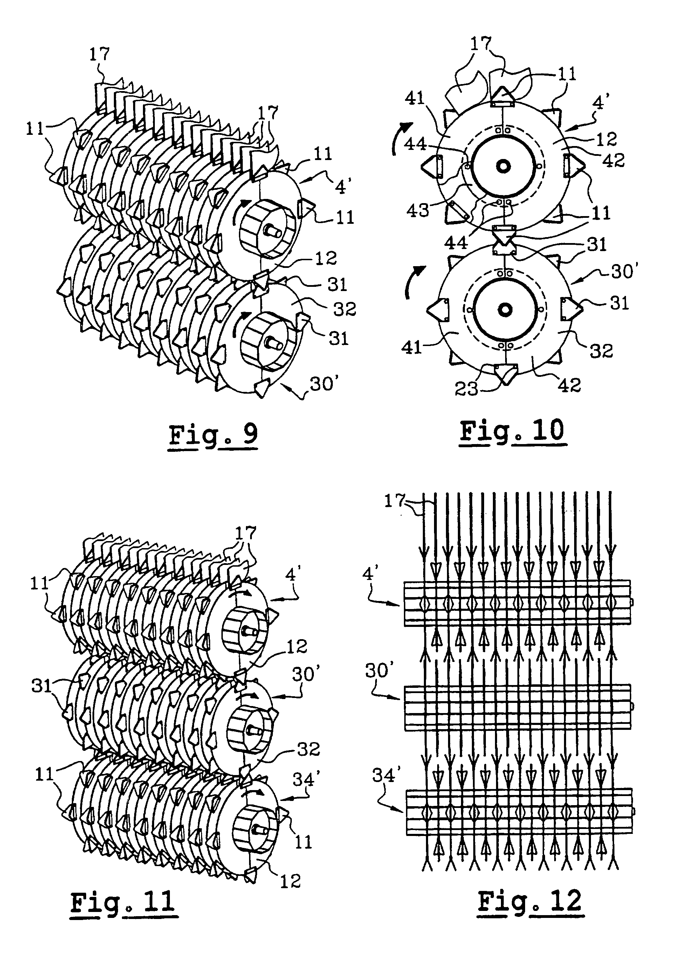

La figure 9 représente une variante de la figure 5 montrant un couple de rotors munis d'une multitude de disques qui permettent de déchiqueter et de découper d'une manière très fine les balles de fourrage ou de paille.

Le rotor supérieur 4' est muni de disques 12, dont la périphérie coopère avec des dents 17, comme précédemment. Le nombre de dents et le nombre de disques est adapté au produit final désiré et à la destination de la machine.

Chaque disque 12 comporte des couples de sections 11 boulonnées au niveau de sa périphérie, lesquelles sections 11 passent de part et d'autre des dents 17 correspondantes.

Chaque disque 12 peut comporter entre trois et douze couples de sections par exemple. Deux disques adjacents sont par exemple disposés de façon à décaler angulairement les couples de sections pour les positionner en quinconce.

Le rotor inférieur 30' comporte des disques 32 munis, sur l'un de leurs côtés, de sections 31. Le nombre des sections 31 peut être supérieur au nombre de couples de sections 11 disposés sur le rotor 4. Deux disques adjacents 32 du rotor 30' peuvent être décalés angulairement, de façon à placer également les sections en quinconce.

Comme détaillé auparavant figure 7, les dents 31 des disques 32 du rotor 30' se situent dans le plan des disques 12 du rotor 4'.

Là aussi, comme pour la figure 5, le nombre de disques du rotor inférieur peut être plus réduit que le nombre de disques du rotor supérieur.

La figure 10 montre les rotors 4' et 30' superposés et les dents 17 de la barrière, dans deux positions différentes, comme expliqué auparavant.

Le montage des disques est illustré sur cette figure. Les disques 12, 32 sont en effet constitués de deux parties en forme de demi-couronne. Chaque demi-couronne 41, 42 est assemblée sur une collerette d'adaptation 43 par tout moyen approprié, boulons 44 ou autres, et elles sont également assemblées entre elles au moyen des boulons 23 par exemple, des couples de sections 11 ou des sections 31, selon le cas, au niveau de leurs extrémités.

Les collerettes d'adaptation 43 se présentent sous la forme de petites couronnes qui sont soudées sur le tambour constituant le rotor. Ces collerettes 43 sont réparties sur la longueur du rotor et permettent d'installer le nombre de disques 12, 32, nécessaires selon le domaine d'utilisation et les produits à déchiqueter.

Cette disposition constructive s'applique à tous les rotors, qu'il soit unique ou en grand nombre, trois, quatre ou plus.

La figure 11 représente une variante du dispositif de démêlage-déchiquetage, qui comporte trois rotors superposés, et la figure 12 est une vue de face de la figure 11 montrant le front de déchiquetage et de découpe constitué par les trois rotors superposés et par les dents 17 disposées à la partie supérieure.

Les trois rotors 4', 30' et 34', tournent dans le même sens comme indiqué par les flèches, figure 11, et ils peuvent tourner à des vitesses différentes comme indiqué précédemment.

Le nombre de disques peut décroître entre le rotor supérieur et le rotor inférieur comme mentionné précédemment.

D'une manière générale, la barrière 16 comporte autant de dents 17 que le rotor supérieur a de disques. Le pas entre deux dents adjacentes est en fait choisi en fonction du domaine d'utilisation de la machine et du niveau de fragmentation souhaité pour les produits. Il est par exemple de l'ordre de 30 à 300 mm.

Selon le diamètre et l'encombrement des rotors, il est aussi possible de réaliser une cascade de rotors, en alternant des rotors avec des disques identiques au rotor supérieur 4 ou 4', et des rotors avec des disques identiques au rotor 30 ou 30'. Ces rotors en cascade peuvent tourner également à des vitesses différentes de façon dégressives en partant du rotor inférieur, pour répartir le débit entre les rotors adjacents et entre le rotor supérieur et la barrière 16.

Lorsque plusieurs rotors sont superposés, en cascade par exemple, le nombre de disques peut être différent d'un rotor à l'autre, de façon dégressive en partant du rotor supérieur; les sections droites 31 restent placées dans le plan des disques porteurs des couples de sections 11.

## Revendications

1. Dispositif de démêlage-déchiquetage de produits du genre fourrage, conditionnés en balles, comprenant, d'une part, au moins un rotor (4) muni d'organes pour découper ladite balle et, d'autre part, une barrière (16) en forme de herse, munie de dents (17), chargée de retenir ladite balle et/ou de recycler les produits, ledit rotor (4) comportant au moins un disque (12) dont la périphérie est circulaire et lisse, lequel disque (12) coopère avec une desdites dents (17) de ladite herse (16), laquelle dent (17) est placée dans le même plan que ledit disque (12), l'ensemble formant un front de retenue, **caractérisé en ce que** le disque à périphérie circulaire et lisse (12) est associé de part et d'autre de son plan à des organes de découpe en saillie en forme de couteaux ou sections (11), lesquels couteaux ou sections (11) sont aménagés par couples et sont chacun disposés en biais par rapport au plan dudit disque (12) et de ladite dent associée (17), de manière à former un Vé de découpe ouvert sur ladite dent (17).

2. Dispositif de démêlage-déchiquetage selon la revendication 1, **caractérisé en ce que** les couples de couteaux ou sections (11) sont fixés sur le disque (12).

3. Dispositif de démêlage-déchiquetage selon la revendication 2, **caractérisé en ce que** l'angle de la face des sections (11) par rapport à la surface latérale de la dent (17) et par rapport au plan du disque sur lequel elles sont montées, est compris entre 0 et 45°, de préférence de l'ordre de 20°.

4. Dispositif de démêlage-déchiquetage selon l'une quelconque des revendications 1 à 3, **caractérisé en ce qu'**il comporte un rotor supplémentaire (30) comportant des disques (32), lesquels disques (32) sont munis de sections droites (31) fixées sur un même flanc du disque, lesquelles sections (31) se situent dans le plan de chaque disque (12) correspondant du rotor (4), et s'inscrivent dans un cercle qui tangente, avec un jeu fonctionnel raisonnable, la périphérie des disques (12) associés, de manière à coopérer avec les couples de couteaux ou sections (11) desdits disques (12).

5. Dispositif de démêlage-déchiquetage selon la revendication 4, **caractérisé en ce que** les rotors (4) et (30) tournent dans le même sens à des vitesses différentes dans une proportion de l'ordre de 10 à 30 %, le rotor inférieur tournant plus vite que le rotor supérieur.

6. Dispositif de démêlage-déchiquetage selon l'une quelconque des revendications 4 ou 5, **caractérisé en ce que** le rotor (30) comporte un nombre de sections (31) qui est supérieur aux couples de sections (11) du rotor supérieur (4).

7. Dispositif de démêlage-déchiquetage selon l'une quelconque des revendications 5 ou 6, **caractérisé en ce qu'**il comprend une cascade de rotors tournant dans le même sens, à des vitesses différentes allant décroissant depuis le rotor inférieur vers le rotor supérieur, lesquels rotors comportent, de façon alternée, soit des disques avec des couples de sections (11) comme le rotor supérieur, soit des disques avec des sections droites (31).

8. Dispositif de démêlage-déchiquetage selon l'une quelconque des revendications 4 à 7, **caractérisé en ce que** le nombre de disques sur les rotors superposés est différent, de façon dégressive en partant du rotor supérieur, les sections droites (31) restant placées dans le plan des disques correspondants munis des couples de sections (11).

9. Dispositif de démêlage-déchiquetage selon l'une quelconque des revendications 1 à 8, **caractérisé en ce que** le ou les rotors munis de disques comportent des collerettes d'adaptation (43) réparties sur leur longueur et soudées sur le tambour cylindrique dudit rotor, lesquelles collerettes permettent le montage des disques, lesquels disques se présentent sous la forme de deux demi-couronnes (41, 42), lesquelles demi-couronnes sont d'une part, assemblées par tout moyen approprié sur lesdites collerettes d'adaptation, boulonnage ou autre et, d'autre part, assemblées entre elles par les sections ou couples de sections qui se positionnent au niveau de leur jonction.

10. Dispositif de démêlage-déchiquetage selon l'une quelconque des revendications 1 à 8, **caractérisé en ce que** la barrière (16) en forme de herse comporte des dents (17) réparties avec un pas compris entre 30 et 300 mm.

11. Dispositif de démêlage-déchiquetage selon l'une quelconque des revendications 1 à 10, adapté à une machine de distribution et/ou de mélange de produits, **caractérisé en ce que** la barrière (16) est disposée à la partie supérieure de la benne de ladite machine, au-dessus du rotor supérieur (4), laquelle barrière est mobile autour dudit rotor (4) sur une portion de sa périphérie dont l'amplitude est de l'ordre de 35 à 40°, en partant de la normale et en allant vers l'amont, c'est-à-dire vers l'entrée de ladite benne.

12. Dispositif de démêlage-déchiquetage selon la revendication 11, **caractérisé en ce que** la barrière (16) comporte, à sa partie supérieure, un volet déflecteur (22) articulé et guidé sur le rebord supérieur de la benne, de façon à modifier l'angle de la trajectoire des produits recyclés en fonction de la position de ladite barrière (22) par rapport au rotor (4).

## Patentansprüche

1. Vorrichtung zum Auflockern und Zerkleinern von Produkten in der Art von Futtermitteln, die in Ballen verpackt sind, einerseits umfassend mindestens einen Rotor (4), der mit Organen zum Zerschneiden des Ballens versehen ist, und andererseits eine Schranke (16) in Form einer Egge, die mit Zähnen (17) versehen ist und die Aufgabe hat, den Ballen zurückzuhalten und/oder die Produkte zu rezyklieren, wobei der Rotor (4) mindestens eine Scheibe (12) umfasst, deren Peripherie kreisförmig und glatt ist, wobei die Scheibe (12) mit einem der Zähne (17) der Egge (16) zusammenwirkt, wobei dieser Zahn (17) in derselben Ebene wie die Scheibe (12) angeordnet ist, wobei die Einheit eine Haltefront bildet, **dadurch gekennzeichnet, dass** die Scheibe mit kreisförmiger und glatter Peripherie (12) beiderseits ihrer Ebene mit Schneidorganen verbunden ist, die in Form von Messern oder Sektionen (11) vorspringen, wobei die Messer oder Sektionen (11) paarweise angeordnet sind und jeweils in Bezug auf die Ebene der Scheibe (12) und den zugehörigen Zahn (17) schräg vorgesehen sind, um ein Schneideprisma zu bilden, das am Zahn (17) offen ist.

2. Vorrichtung zum Auflockern und Zerkleinern nach Anspruch 1, **dadurch gekennzeichnet, dass** die Paare von Messern oder Sektionen (11) an der Scheibe (12) befestigt sind.

3. Vorrichtung zum Auflockern und Zerkleinern nach Anspruch 2, **dadurch gekennzeichnet, dass** der Winkel der Vorderseite der Sektionen (11) in Bezug auf die Seitenfläche des Zahns (17) und in Bezug auf die Ebene der Scheibe, an der sie befestigt sind, zwischen 0 und 45°, vorzugsweise bei ungefähr 20°, beträgt.

4. Vorrichtung zum Auflockern und Zerkleinern nach einem der Ansprüche 1 bis 3, **dadurch gekennzeichnet, dass** sie einen Zusatzrotor (30) umfasst, der Scheiben (32) aufweist, wobei die Scheiben (32) mit geraden Sektionen (31) versehen sind, die auf einer selben Seite der Scheibe befestigt sind, wobei sich die Sektionen (31) in der Ebene jeder Scheibe (12) befinden, die dem Rotor (4) entspricht, und in einen Kreis eingeschrieben sind, der mit einem angemessenen Funktionsspiel die Peripherie der zugehörigen Scheiben (12) tangiert, um mit den Paaren von Messem oder Sektionen (11) der Scheiben (12) zusammenzuwirken.

5. Vorrichtung zum Auflockern und Zerkleinern nach Anspruch 4, **dadurch gekennzeichnet, dass** sich die Rotoren (4) und (30) in dieselbe Richtung mit unterschiedlichen Geschwindigkeiten in einem Verhältnis von ungefähr 10 bis 30 % drehen, wobei sich der untere Rotor schneller als der obere Rotor dreht.

6. Vorrichtung zum Auflockern und Zerkleinern nach Anspruch 4 oder 5, **dadurch gekennzeichnet, dass** der Rotor (30) eine Anzahl von Sektionen (31) umfasst, die größer als die Sektionspaare (11) des oberen Rotors (4) ist.

7. Vorrichtung zum Auflockern und Zerkleinern nach Anspruch 5 oder 6, **dadurch gekennzeichnet, dass** sie eine Kaskade von Rotoren umfasst, die sich in dieselbe Richtung mit unterschiedlichen Geschwindigkeiten, die vom unteren Rotor zum oberen Rotor abnehmend sind, drehen, wobei die Rotoren alternierend entweder Scheiben mit Sektionspaaren (11), wie der obere Rotor, oder Scheiben mit geraden Sektionen (31) umfassen.

8. Vorrichtung zum Auflockern und Zerkleinern nach einem der Ansprüche 4 bis 7, **dadurch gekennzeichnet, dass** die Anzahl von Scheiben auf den übereinander angeordneten Rotoren unterschiedlich ist, und zwar vom oberen Rotor ausgehend abnimmt, wobei die geraden Sektionen (31) in der Ebene der entsprechenden, mit den Sektionspaaren (11) versehenen Scheiben angeordnet bleiben.

9. Vorrichtung zum Auflockern und Zerkleinern nach einem der Ansprüche 1 bis 8, **dadurch gekennzeichnet, dass** der oder die Rotoren, die mit Scheiben ausgestattet sind, Anpassungskragen (43) umfassen, die auf ihrer Länge verteilt und an der zylindrischen Trommel des Rotors angeschweißt sind, wobei die Kragen die Befestigung der Scheiben ermöglichen, wobei die Scheiben in Form von zwei Halb-Kragen (41, 42) vorhanden sind, wobei die Halb-Kragen einerseits durch jedes geeignete Mittel, Verbolzen oder dergleichen an den Anpassungskragen befestigt sind, und andererseits miteinander durch die Sektionen oder Sektionspaare zusammengefügt sind, die im Bereich ihrer Verbindungsstelle angeordnet sind.

10. Vorrichtung zum Auflockern und Zerkleinern nach einem der Ansprüche 1 bis 8, **dadurch gekennzeichnet, dass** die Schranke (16) in Form einer Egge Zähne (17) umfasst, die mit einer Teilung zwischen 30 und 300 mm angeordnet sind.

11. Vorrichtung zum Auflockern und Zerkleinern nach einem der Ansprüche 1 bis 10, die an eine Maschine zur Verteilung und/oder Mischung von Produkten angepasst ist, **dadurch gekennzeichnet, dass** die Schranke (16) am oberen Teil des Kübels der Maschine über dem oberen Rotor (4) angeordnet ist, wobei die Schranke um den Rotor (4) auf einem Abschnitt seiner Peripherie beweglich ist, dessen Amplitude, ausgehend von der Normalen zulaufwärts, d.h. zum Eingang des Kübels hin, in der Größenordnung von 35° bis 40° liegt.

12. Vorrichtung zum Auflockern und Zerkleinern nach Anspruch 11, **dadurch gekennzeichnet, dass** die Schranke 16) an ihrem oberen Bereich eine Ablenkklappe (22) umfasst, die auf einem oberen Rand des Kübels angelenkt ist und geführt wird, um den Winkel der Bahn der rezyklierten Produkte in Abhängigkeit von der Position der Schranke (22) in Bezug auf den Rotor (4) zu verändern.

## Claims

1. Device for unravelling/shredding products of the fodder type, packaged in bales, comprising, on the one hand, at least one rotor (4) provided with means for cutting the said bale and, on the other hand, a barrier (16) in the form of a harrow, provided with teeth (17) liable to hold said bale back and/or to recirculate the products, said rotor (4) comprising at least one disc (12) the circular periphery of which is plain, which disc (12) cooperates with one of the teeth (17) of said harrow (16), which tooth (17) is placed in the same plane as the disc (12) and the assembly forms a retaining front, **characterized in that** the disc with a plain circular periphery (12) is in combination on both sides of the plane thereof with protruding cutting members as knives or sections (11) said knives or sections (11) being provided by pairs and are each skew located with respect to the plane of said disc (12) and the cooperating tooth (17) in order to provide an open cutting vee on said tooth 17.

2. Unravelling/shredding device according to Claim 1, **characterized in that** the pairs of knives or sections (11) are fixed on the disc (12).

3. Unravelling/shredding device according to Claim 2, **characterized in that** the angle of the face of the sections (11) with respect to the lateral surface of the tooth (17) and with respect to the plane of the disc on which they are mounted, is between 0 and 45°, preferably of about 20°.

4. Unravelling/shredding device according to any one of Claims 1 to 3, **characterized in that** it comprises an additional rotor (30) comprising discs (32), which discs are provided with straight sections (31) fixed on one and the same flank of the disc, which sections (31) lie in the plane of each corresponding disc (12) of the rotor (4), and are inscribed in a circle which is tangent with a suitable clearance to the periphery of the discs (12) in order to cooperate with the pairs of knives or sections (11) of said discs (12).

5. Unravelling/shredding device according to Claim 4, **characterized in that** the rotors (4) and (30) rotate in the same direction at different speeds in a proportion of about 10 to 30 %, the lower rotor rotating more quickly than the upper rotor.

6. Unravelling/shredding device according to any one of Claims 4 or 5, **characterized in that** the rotor (30) has a number of sections (31) which is greater than the pairs of sections (11) of the upper rotor (4).

7. Unravelling/shredding device according to any one of Claims 5 or 6, **characterized in that** it comprises a cascade of rotors rotating in the same direction at different speeds decreasing from the lower rotor to the upper rotor, which rotors comprise, in alternation, either discs with pairs of sections (11) like the upper rotor, or discs with straight sections (31).

8. Unravelling/shredding device according to any one of Claims 4 to 7, **characterized in that** the number of discs on the superposed rotors differs, decreasing starting with the upper rotor, the straight sections (31) remaining placed in the plane of the corresponding discs provided with the pairs of sections (11).

9. Unravelling/shredding device according to any one of Claims 1 to 8, **characterized in that** the rotor or rotors provided with discs comprise adapter collars (43) distributed along their length and welded to the cylindrical drum of said rotor, which collars allow the discs to be mounted, which discs are in the form of two half-rings (41, 42), which half-rings are, on the one hand, joined by any appropriate means to said adapter collars, bolting or the like and, on the other hand, joined together by the sections or pairs of sections positioned where they meet.

10. Unravelling/shredding device according to any one of Claims 1 to 8, **characterized in that** the harrow-form barrier (16) has teeth (17) distributed at a pitch of between 30 and 300 mm.

11. Unravelling/shredding device according to any one of Claims 1 to 10, adapted to a machine for dispensing and/or mixing products, **characterized in that** the barrier (16) is arranged at the upper part of the body of said machine, above the upper rotor (4), which barrier can move around said rotor (4) over a portion of its periphery the amplitude of which is about 35 to 40° starting from the normal and moving upstream, that is to say towards the inlet to said body.

12. Unravelling/shredding device according to Claim 11, **characterized in that** the barrier (16) comprises, at its upper part, a deflector flap (22) articulated and guided on the upper rim of the body, so as to alter the angle of the path of the recirculated products according to the position of said deflector (22) with respect to the rotor (4).
